# EUROPEAN PATENT APPLICATION

(11) **EP 4 075 165 A1**
(43) Date of publication of application: **19.10.2022**
(21) Application number: 20897374.3
(22) Date of filing: 26.11.2020
(51) Int. Cl.: G01S 17/48

(54) **PULSE RANGING DEVICE AND METHOD, AND AUTOMATIC CLEANING APPARATUS HAVING SAME**

(30) Priority: 06.12.2019 CN 201911242855
(71) Applicant: Beijing Roborock Technology Co., Ltd., Beijing 100085 (CN)
(72) Inventor: ZHANG, Zhichun, Beijing 100085 (CN); ZHANG, Yuqing, Beijing 100085 (CN); ZHANG, Wei, Beijing 100085 (CN); GAO, Chao, Beijing 100085 (CN)
(74) Representative: Studio Torta S.p.A.
(86) International application number: PCT/CN2020/131782
(87) International publication number: WO 2021/109918

(57) **Abstract**

A pulse ranging apparatus, includes: an emitting unit (11) configured to emit an optical pulse signal; a receiving unit (12) configured to receive a reflected optical pulse signal by an obstacle, and convert it into an electrical signal; a threshold comparator (13), configured to compare the electrical signal with a preset threshold and to generate a pulse trigger signal according to a comparison result; a time delay unit (14) configured to delay the pulse trigger signal by a preset time length to generate a delay trigger signal; a timing unit (15), configured to determine a time of flight of the optical pulse signal according to an emitting time of the optical pulse signal, a generating time of the delay trigger signal, and a delay of the preset time length; and a distance determination unit configured to determine a distance between the pulse ranging apparatus and the obstacle according to the time of flight.

## Description

### CROSS-REFERENCE TO RELATED APPLICATIONS

This application claims priority to Chinese application No. 201911242855.4, filed on December 06, 2019, which is incorporated herein by reference in its entirety for all purposes.

### TECHNICAL FIELD

The present disclosure relates to the field of measurement, and in particular, to a pulse ranging apparatus and a pulse ranging method, and an autonomous cleaning device having the apparatus.

### BACKGROUND

A cleaning robot can automatically travel in an area and perform cleaning without control. A laser distance sensor (LDS) is typically mounted on the cleaning robot. A distances between the cleaning robot and various obstacles in the area are measured through the LDS so as to create a map for the area, thus, the cleaning robot can be located in the map and the obstacles are avoided during traveling of the cleaning robot.

A time of flight (TOF) ranging method is mainly used in current laser distance sensors. Compared with other technical solutions, the TOF ranging method has advantages such as low costs, long ranging scope, and high long-distance precision, and is the mainstream technology direction of low-cost laser distance sensor. A laser distance sensor based on the TOF ranging method mainly includes a laser emitter and a receiver including a photoelectric sensor. During ranging, the laser emitter emits an optical pulse, which hits an object and is reflected back, and is received by the receiver. The receiver can accurately measure a flying time of the optical pulse from being emitted to being reflected back. The optical pulse flies at a speed of light, and the receiver can receive a previous reflected pulse before the next pulse is emitted. Because the speed of light is known, the flying time can be converted to measure the distance.

In a case that the TOF ranging method is adopted on an autonomous cleaning device, short-distance ranging is often required. However, current TOF ranging is not accurate enough in a case of being applied in a short-distance ranging environment.

### SUMMARY

The summary part is provided to briefly introduce ideas, which will be described in detail later in the specific description of embodiments part. The summary part is not intended to identify key or necessary features of the claimed technical solutions, nor is it intended to limit the scope of the claimed technical solutions.

Embodiments of the present disclosure provide a pulse ranging apparatus and method, and an autonomous cleaning device having the apparatus, which can resolve at least one of the foregoing technical problems. Specific solutions are as follows: According to a specific implementation of the present disclosure, according to a first aspect, an embodiment of the present disclosure provides a pulse ranging apparatus, including:
an emitting unit, configured to emit an optical pulse signal;
a receiving unit, configured to receive a reflected optical pulse signal by an obstacle, and convert the reflected optical pulse signal into an electrical signal;
a threshold comparator, configured to compare the electrical signal with a preset threshold, and generate a pulse trigger signal according to a comparison result;
a time delay unit, configured to delay the pulse trigger signal by a preset time length to generate a delay trigger signal;
a timing unit, configured to determine a time of flight of the optical pulse signal according to a time point at which the emitting unit emits the optical pulse signal, a time point at which the delay trigger signal is generated, and a delay of the preset time length; and
a distance determination unit, configured to determine a distance between the pulse ranging apparatus and the obstacle according to the time of flight of the optical pulse signal.

Optionally, the distance determination unit further includes a correction subunit configured to correct the distance between the pulse ranging apparatus and the obstacle according to a pulse width of the delay trigger signal.

Optionally, the timing unit includes a dual-channel timer, two channels of the dual-channel timer respectively times a rising edge and a falling edge of the delay trigger signal, and the timing unit determines the pulse width of the delay trigger signal according to the rising edge and the falling edge.

Optionally, the dual-channel timer includes an amplification circuit, configured to amplify the delay trigger signal.

Optionally, the time delay unit includes one of followings: a time delay circuit including a gate circuit and a capacitor, a time delay circuit including gate circuits connected in series, and a time delay circuit including a capacitor.

Optionally, the receiving unit includes a PIN diode configured to convert the reflected optical pulse signal into an electrical signal.

According to a second aspect of embodiments of the present disclosure, a pulse ranging method is provided, including:
emitting an optical pulse signal;
receiving a reflected optical pulse signal by an obstacle, and converting the reflected optical pulse signal into an electrical signal;
comparing the electrical signal with a preset threshold, and generating a pulse trigger signal according to a comparison result;
delaying the pulse trigger signal by a preset time length to generate a delay trigger signal;
determining a time of flight of the optical pulse signal according to an emitting time of the optical pulse signal, a generating time of the delay trigger signal, and a delay of the preset time length; and
determining a distance between the pulse ranging apparatus and the obstacle according to the time of flight of the optical pulse signal, where the pulse ranging apparatus sends and receives the optical pulse signal.

Optionally, the method further includes:
correcting the distance between the pulse ranging apparatus and the obstacle according to a pulse width of the delay trigger signal.

Optionally, according to the foregoing method, the method further includes: amplifying the delay trigger signal.

According to a third aspect of embodiments of the present disclosure, an autonomous cleaning device is provided, including the pulse ranging apparatus according to the first aspect. Optionally, one pulse ranging apparatus is included, and the pulse ranging apparatus is disposed at the top of the autonomous cleaning device.

Optionally, multiple pulse ranging apparatuses are included, and the pulse ranging apparatuses are disposed on a side surface of the autonomous cleaning device.

Embodiments of the present disclosure provide a pulse ranging apparatus and method, and an autonomous cleaning device having the apparatus. In the solutions according to the embodiments of the present disclosure, after receiving an optical pulse signal reflected by an obstacle, a pulse ranging apparatus delays the pulse signal to some extent, so as to avoid superposition between an emitted optical pulse signal and a received optical pulse signal, and eliminating a measurement dead zone.

### BRIEF DESCRIPTION OF DRAWINGS

With reference to the accompanying drawings and the following implementations, the foregoing and other features, advantages, and aspects of the embodiments of the present disclosure will become clearer. Throughout the accompanying drawings, same or similar reference numerals represent same or similar elements. It should be understood that the accompanying drawings are illustrative, and elements are not necessarily drawn in a scale. In the accompanying drawings:
FIG. 1 illustrates a schematic unit diagram of a pulse ranging apparatus according to an embodiment of the present disclosure;
FIG. 2 illustrates a schematic block diagram of a receiving unit of a pulse ranging apparatus according to an embodiment of the present disclosure;
FIG. 3 illustrates a time delay circuit diagram, including a gate circuit and a capacitor, of a pulse ranging apparatus according to an embodiment of the present disclosure;
FIG. 4 illustrates a time delay circuit diagram including a series of gate circuits of a pulse ranging apparatus according to an embodiment of the present disclosure;
FIG. 5 illustrates a time delay circuit diagram including a capacitor of a pulse ranging apparatus according to an embodiment of the present disclosure;
FIG. 6 illustrates a schematic view of pulse overlapping of a pulse ranging apparatus according to an embodiment of the present disclosure;
FIG. 7 illustrates a structural view of an autonomous cleaning device according to an embodiment of the present disclosure; and
FIG. 8 illustrates a flowchart of a pulse ranging method according to an embodiment of the present disclosure.

### DESCRIPTION OF EMBODIMENTS

The following describes the embodiments of the present disclosure in more detail with reference to the accompanying drawings. Although some embodiments of the present disclosure are illustrated in the accompanying drawings, it should be understood that the present disclosure may be implemented in various forms, and should not be construed as a limit to the embodiments described herein. Instead, these embodiments are provided for a more thorough and complete understanding of the present disclosure. It should be understood that the accompanying drawings and embodiments of the present disclosure are merely used for illustrative purposes and are not intended to limit the protection scope of the present disclosure.

It should be understood that steps recorded in embodiments of the method according to the present disclosure may be performed in different orders, and/or performed in parallel. In addition, embodiments of the method may further include additional steps and/or omit steps illustrated. The scope of the present disclosure is not limited in this respect.

The term "include" and its modifications as used herein are inclusive, that is, "include but not limited to". The term "based on" means "based on at least a part". The term "an embodiment" represents "at least one embodiment"; the term "another embodiment" means "at least one further embodiment"; and the term "some embodiments" represents "at least some embodiments". Definitions related to other terms will be provided in the following description.

It should be noted that the concepts such as "first" and "second" mentioned in the present disclosure are merely intended to distinguish different apparatuses, units, or elements, and are not intended to limit a sequence or interdependence of functions performed by these apparatuses, units, or elements.

It should be noted that modifications of "one" and "plural" mentioned in the present disclosure are illustrative and not limiting, and one of ordinary skill in the art should understand that they are understood as "one or more" unless otherwise specified in the context.

Names of messages or information exchanged between multiple apparatuses in the embodiments of the present disclosure are intended for illustrative purposes only, and are not intended to limit the scope of these messages or information.

The following describes optional embodiments of the present disclosure in detail with reference to the accompanying drawings.

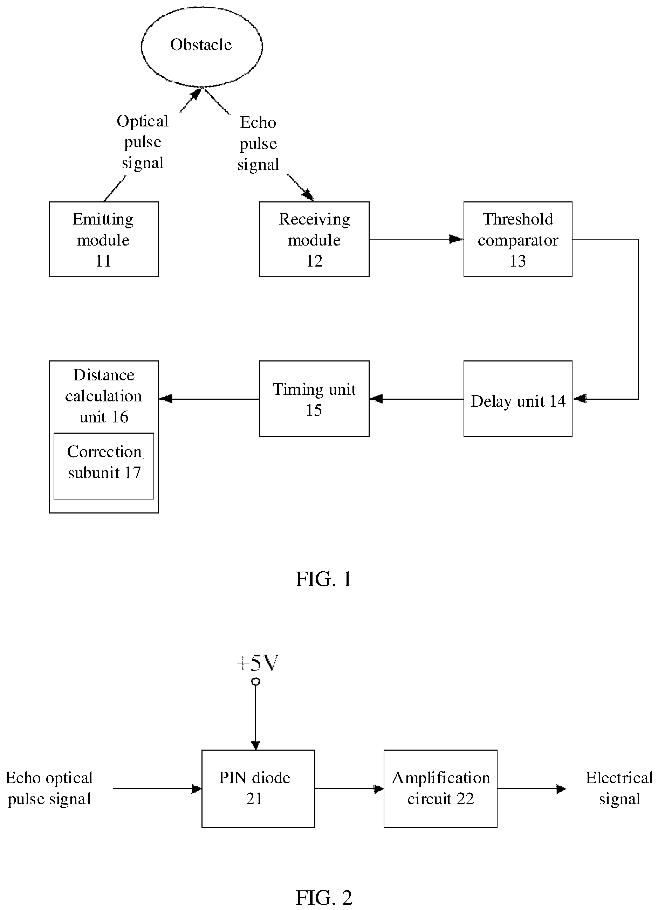

Referring to FIG. 1, an embodiment of the present disclosure provides a pulse ranging apparatus. The pulse ranging apparatus optionally includes some or all of the following sub-circuit parts: an emitting unit 11, a receiving unit 12, a threshold comparator 13, a time delay unit 14, a timing unit 15, and a distance determination unit 16. Positions of the emitting unit 11, the receiving unit 12, the threshold comparator 13, the time delay unit 14, the timing unit 15, and the distance determination unit 16 are not specifically limited, for example, may be positioned on an internal or an external surface of the pulse ranging apparatus, and the emitting unit 11 and the receiving unit 12 may have an emitting window and a receiving window, respectively. Details are as follows. The emitting unit 11 is configured to emit a pulse signal, especially an optical pulse signal. The emitting unit 11 emits a pulse signal in real time to surroundings under control of a cleaning device, so as to learn a surrounding environment in a traveling path of the cleaning device, for example, whether there is an obstacle.

In an embodiment, the emitting unit 11 includes but is not limited to a common laser pulse emitting unit, and the laser pulse emitting unit emits a laser pulse signal under excitation of an electrical signal. The emitting unit may include a light emitting element. In this embodiment, because of monochromaticity, directivity, and collimation features of a laser beam, a light source that uses a laser beam can make measurement more accurate than any other light source. Therefore, a laser diode (LD) is taken as a light source.

An optical pulse signal is a discrete signal with various forms. Compared with a common analog signal (such as a sine wave), waveforms are discontinuous in a time axis (there is a clear interval between adjacent waveforms), but have a cycle. In this embodiment, optional optical pulse signals include a rectangular wave, a sawtooth wave, a triangular wave, a differentiated wave, and the like. For example, optical pulse signals may be achieved by turning on and off any optical signal alternatingly. Because the laser pulse signal has features of good monochromaticity, low divergence, and high brightness (power), it is an optical pulse signal which is relatively suitable for the pulse ranging apparatus.

The receiving unit 12 is configured to receive a reflected optical pulse signal by an obstacle, and to convert the reflected optical pulse signal into an electrical signal. An emitted optical pulse signal is usually reflected back upon incident on an obstacle. The reflectivity of the optical pulse signal on different obstacles are different. For example, the reflectivity is usually relatively low for a rough and irregular obstacle, and the reflectivity is relatively high for a smooth obstacle. With an optical signal with continuous pulse emission, a probability of receiving a reflected optical pulse signal increases greatly.

Referring to FIG. 2, the receiving unit 12 includes an optical-to-electrical converter configured to receive an optical pulse signal and convert the optical pulse signal into an electric signal. In an embodiment of the present disclosure, the receiving unit 12 may include a PIN diode 21, wherein the PIN diode is a diode in which a P-I-N structure is formed by adding a thin layer of a low-doped intrinsic semiconductor layer between P-type and N-type semiconductor materials. The PIN diode has advantages such as a simple peripheral circuit, being less affected by changes in temperature, and a low working voltage. In a case that the PIN diode is applied to an autonomous cleaning device such as a sweeping robot, efficiency of optical-to-electrical conversion can be improved, and sensitivity of the receiving unit can be improved.

When the optical signal received by the receiving unit 12 is converted into an electrical signal by the optical-to-electrical converter, the optical signal may be converted into a voltage signal or a current signal based on different optical-to-electrical converters.

The receiving unit 12 may further include an amplification module 22, configured to amplify the converted voltage signal or the converted current signal. The amplification module is a conventional circuit, and details are not described herein.

The threshold comparator 13 is configured to: compare the electrical signal converted by the receiving unit 12 with a preset threshold, and generate a pulse trigger signal according to a comparison result. The preset threshold may be set according to an actual product requirement, for example, 0.5 V-2 V or 0.05 A-1 A is set. For example, 1 V may be set as the preset threshold. And for another example, 0.1 A may be set as the preset threshold. An echo signal whose pulse amplitude is greater than the threshold is taken as a valid pulse trigger signal.

The threshold comparator generates a trigger signal as the followings. In a case that an amplitude of the amplified electrical signal is less than the preset threshold, no trigger signal is output; and in a case that the amplitude of the amplified electrical signal is greater than or equal to the preset threshold, a trigger signal with a constant amplitude is output.

The time delay unit 14 is configured to generate a delay trigger signal by delaying the pulse trigger signal by a preset time length.

In a case that a nearby obstacle measured, because of a short distance from the pulse arranging apparatus to the obstacle, an optical pulse signal and an echo signal may be superposed, and consequently, an accurate measurement cannot be obtained. Therefore, a time delay unit is added to the pulse ranging apparatus according to this embodiment of the present disclosure to delay a pulse trigger signal by a preset time length, so that a delay trigger signal is generated at a preset time length after the pulse trigger signal. The emitted optical pulse signal is prevented from being superposed with the delay trigger signal, so that data associated with ranging calculation is extracted from the delay trigger signal, and a dead zone during short ranging is eliminated.

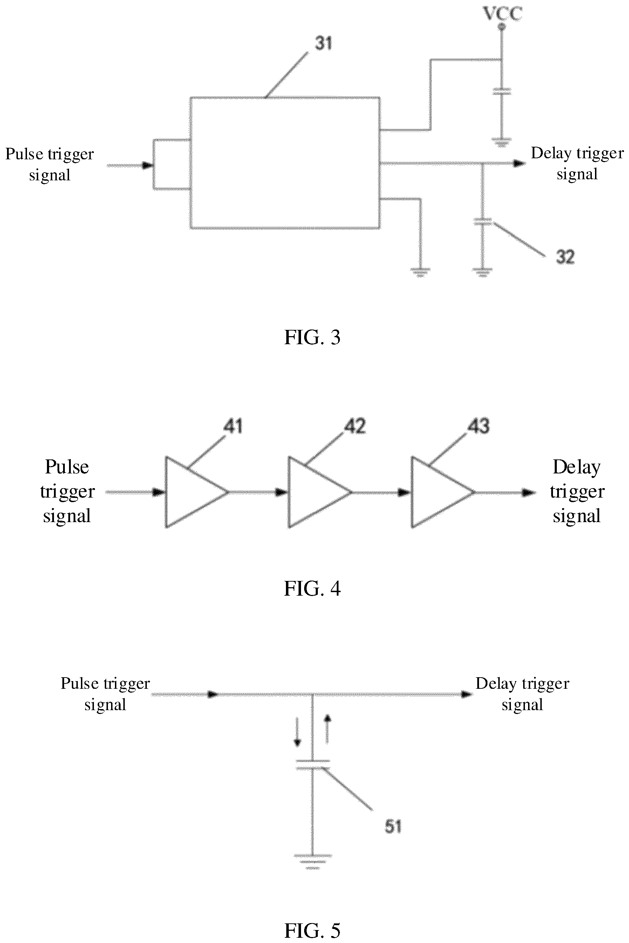

In this embodiment of the present disclosure, the time delay unit may include a time delay circuit. The time delay circuit may include a gate circuit and a capacitor, the time delay circuit may include a series of gate circuits, or the time delay circuit may include a capacitor. They may be implemented in manners illustrated in FIG. 3, FIG. 4, or FIG. 5, respectively.

Referring to FIG. 3, an ultra-thin body (UTB) transistor serves as a first gate circuit 31 to form a time delay circuit with a first capacitor 32. In a case that a pulse trigger signal enters the ultra-thin body transistor, the first gate circuit 31 delays the pulse trigger signal by a first delay (usually, the first delay is relatively short, and cannot meet a delay requirement). The delayed pulse trigger signal enters the first capacitor 32, the first capacitor 32 delays it by a second delay, and finally generates a delay trigger signal that meets preset time length.

Referring to FIG. 4, after a pulse trigger signal enters into a time delay circuit that includes a second gate circuit 41, a third gate circuit 42, and a fourth gate circuit 43 that are connected in series, the gate circuits of the time delay circuit achieve a purpose of a delay by their respective logical relationships, and a delay trigger signal with a preset delay length is generated finally. A quantity of the gate circuits is not limited. In principle, the larger the quantity of gate circuits that are connected in series, the longer the delay. A specific quantity of gate circuits that are connected in series may be designed according to requirement, for example, three to five series-connected gate circuits. The logical relationships between the gate circuits that are connected in series are not described in detail in this embodiment.

Referring to FIG. 5, after a pulse trigger signal enters a time delay circuit formed by a second capacitor 51, the second capacitor 51 is charged. In a case that the second capacitor 51 is fully charged, the second capacitor 51 discharges, so that a delay is achieved, and a delay trigger signal is generated. The capacitance of the capacitor may be designed according to a requirement of delay time length, to increase or decrease charging and discharging time, so as to achieve a preset delay. The time delay unit may further delay the electrical signal in other manners, and details are not described in this embodiment of the present disclosure.

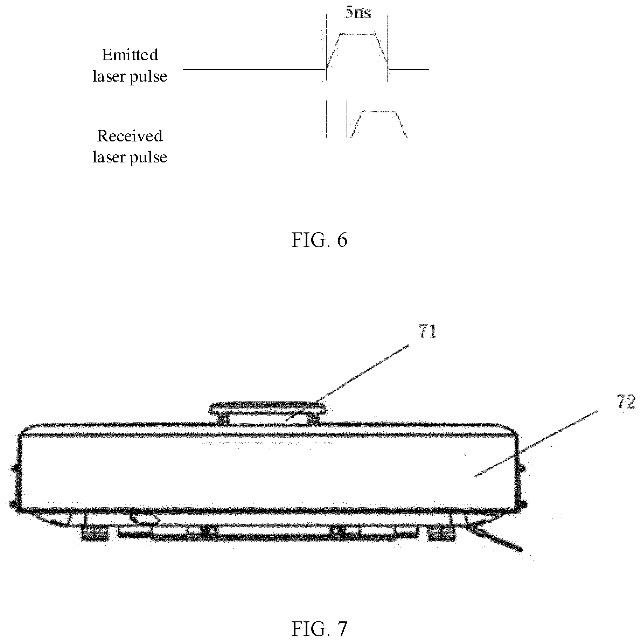

In a case that the pulse ranging apparatus according to this embodiment is applied to an autonomous cleaning device, especially a household autonomous cleaning device, because application scenarios of the device are mostly in a home, ranging is typically of short-distance. For example, in a case that the distance between the autonomous cleaning device and an obstacle is 0.5 m, it can be learned, according to a relationship among the speed of light, the distance, and a time of flight, that a time difference between an emitted laser pulse and a received laser pulse is approximately 3.3 ns. In a case that a laser pulse width is 5 ns, superposition between the emitted laser pulse and the received laser pulse occurs. As illustrated in FIG. 6, a dead zone that is finally generated is located between two dashed lines.

In actual applications, the preset time length may be set to be greater than or equal to one pulse width, so that an echo signal and an emitted signal are effectively separated. For example, the preset time length may be 1 to 10 pulse widths. For example, the preset time length may be 1 to 3 pulse widths. For example, the echo pulse width is about 5 ns, and the preset time length may be set to be greater than 5 ns. For example, a range of the preset time length is 5 ns-50 ns. For another example, the preset time length is 5 ns-7 ns.

The timing unit 15 is configured to determine a time of flight of the optical pulse signal according to an emitting time at which the emitting unit emits the optical pulse signal, a generating time of the delay trigger signal, and a delay of the preset time length.

The timing unit 15 may include a dual-channel timer, two channels of the dual-channel timer respectively time a rising edge and a falling edge of the delay trigger signal, and the timing unit determines a pulse width of the delay trigger signal according to the rising edge and the falling edge. Therefore, accuracy and efficiency of timing are improved.

The dual-channel timer includes an amplification circuit, configured to amplify the delay trigger signal. The amplification of the delay trigger signal can improve accuracy of recognizing signal. Embodiments of the present disclosure provide two application scenarios for the amplification circuit.

Scenario 1: In a case that the delay trigger signal is a current signal, the amplification unit includes a preconverter and a voltage amplifier.

The preconverter is configured to receive a current signal, and convert the current signal into a voltage signal. The voltage amplifier is configured to receive and amplify the voltage signal. Scenario 2: In a case that the delay trigger signal is a voltage signal, the amplification unit is configured to receive and directly amplify the voltage signal.

The distance determination unit 16 is configured to determine a distance between the pulse ranging apparatus and the obstacle according to the time of flight of the optical pulse signal.

The distance determination unit 16 further includes a correction subunit 17.

The correction subunit 17 is configured to correct the distance between the pulse ranging apparatus and the obstacle according to a pulse width of the delay trigger signal.

The pulse width indicates an intensity of an echo pulse, and may reflect information such as the reflectivity of a measured target.

For example, first, n obstacles, T₁, T₂, ..., Tₙ, which have a same calibration distance D₀ and different reflectivity, may be provided, and a laser pulse signal is emitted to the n obstacles respectively. Then, echo signals are received and processed to obtain pulse widths δt₁, δt₂, ..., δtₙ of echo signals corresponding to the n obstacles respectively, wherein δtₙ=t₂ₙ-t₁ₙ, and t2n and t₁ₙ indicate respectively a falling edge moment and a rising edge moment of an n-th echo signal. Initial distance values D₁, D₂, ..., Dₙ of the n obstacles are obtained through a TOF method according to an initial emitting moment to and a rising edge moment that are corresponding to an n-th obstacle. Then, according to the initial distance values D₁, D₂, ..., Dₙ and the calibration distance D₀ of the n obstacles, corresponding distance error values δd₁, δd₂, ..., δdₙ are obtained, wherein δdₙ=Dₙ-D₀. A correspondence between δdₙ and δtₙ is established. Optionally, the correspondence may be established through a piecewise approximation method or a polynomial fitting method, or may be established by establishing a correspondence table through a table lookup method. Finally, in actual measurement, after a pulse width δtₓ of an echo signal reflected by a currently measured target is obtained, a distance error value δdₓ corresponding to δtₓ may be obtained through the correspondence, and the initial distance value Dₓ is corrected and compensated by δdₓ, so as to obtain a corrected distance value D=Dₓ+δdₓ.

After the initial distance value is corrected and compensated, the ranging accuracy and measurement range are improved.

After receiving an optical pulse signal reflected by an obstacle, a pulse ranging apparatus delays the pulse signal to some extent, so as to avoid superposition between an emitted optical pulse signal and a received optical pulse signal, thereby eliminating a measurement dead zone. Embodiments of the present disclosure provide an autonomous cleaning device, and the autonomous cleaning device may include a control system, a drive system, a cleaning system, a power supply system, a human-machine interaction system, and the like. The control system is typically disposed on a circuit board in a machine body of the autonomous cleaning device, and includes a computing processor, such as a central processing unit or an application processor, in communication with a non-transitory a temporary memory, such as a hard disk, a flash memory, and a random access memory. The control system is configured to create an instant map of an environment wherein the autonomous cleaning device through a positioning algorithm such as simultaneous localization and mapping (SLAM) according to obstacle information fed back by the laser ranging apparatus. In addition, with reference to distance information and speed information that are fed back by sensing devices, such as a bumper, a cliff sensor, an ultrasonic sensor, an infrared sensor, a magnetometer, an accelerometer, a gyroscope, an odometer, or the like, provided on the autonomous cleaning device, the control system is further configured to comprehensively determines a current working state of the autonomous cleaning device, for example, crossing a doorsill, climbing onto a carpet, being located at a cliff, being stuck at the top or bottom, being picked up, or the like. In addition, the control system is further configured to adopt specific next action policies for various cases, so that operation of the autonomous cleaning device meets a requirement of a user and enhances user experience. Further, the control system is configured to plan a cleaning path and a cleaning manner that are relatively efficient and rational based on the instant map created according to the SLAM, thereby improving cleaning efficiency of the autonomous cleaning device.

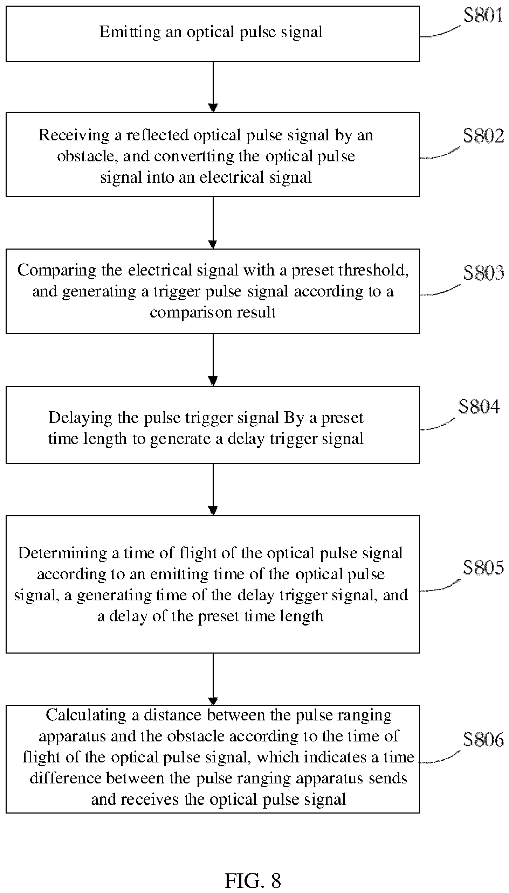

In the autonomous cleaning device according to embodiments of the present disclosure, a pulse ranging apparatus 71 may be disposed on the autonomous cleaning device 72 in a manner of rotating horizontally. As illustrated in FIG. 7, in this case, the pulse ranging apparatus 71 may learn in real time an environment around the autonomous cleaning device through rotating by 360 degrees. In addition, the pulse ranging apparatus 71 may be further disposed on a side surface (not illustrated in the figure) of the autonomous cleaning device 72. In this case, multiple pulse ranging apparatuses may be disposed on the side surface of the autonomous cleaning device, for example, one pulse ranging apparatus is disposed on the front, rear, left, and right side surface of the autonomous cleaning device, respectively, and is configured to obtain distance information of an obstacle around the autonomous cleaning device relatively accurately and efficiently. Embodiments of the present disclosure provide a pulse ranging method. This embodiment continues the embodiment of the foregoing pulse ranging apparatus, and is intended to implement operations of the pulse ranging apparatus. The terms, which have the same meaning as that in the embodiments of the pulse ranging apparatus, and have the same technical effect as the embodiment of the pulse ranging apparatus, will not be elaborated here. With reference to FIG. 8,
an embodiment of the present disclosure provides a pulse ranging method, including
step S801 to step S806.

Step S801: A pulse signal, for example an optical pulse signal, is emitted.

The optical pulse signal includes but is not limited to a typical laser pulse signal. A pulse laser emitter emits a laser pulse signal under excitation of an electrical signal. In this embodiment, because of features of a laser beam, such as monochromatic, directivity, and collimation, a light source that adopts the laser beam can make measurement more accurate than other light. Therefore, a laser diode (LD) is taken as a light source.

After the optical pulse signal is emitted, it propagates along a straight line. If an obstacle within a limited loss distance is encountered, an echo optical pulse signal is generated. Otherwise, after propagating a certain distance, the optical pulse signal is fully attenuated and disappears. The optical pulse signal may be emitted continuously after emission is started under control of a controller, or may be emitted in multiple directions to obtain a surrounding environment condition. Step S802: A reflected optical pulse signal by an obstacle is received and is converted into an electrical signal.

An optical-to-electrical converter, for example, a PIN diode, is typically adopted to receive and convert the reflected optical pulse signal. The PIN diode has advantages such as a simple peripheral circuit, less effected by change in temperature, and a low working voltage and is suitable for household intelligent devices such as an autonomous cleaning device. Different optical-to-electrical converters may convert the reflected optical signal into a voltage signal or a current signal.

Step S803: The electrical signal is compared with a preset threshold, and a pulse trigger signal is generated according to a comparison result.

In a case that an amplitude of an amplified electrical signal is less than the preset threshold, there may be an interference signal, and in this case, no trigger signal is output. In a case that the amplitude of the amplified electrical signal is greater than or equal to the preset threshold, a trigger signal with a fixed amplitude is output, and it is considered that the reflected pulse signal in this case is a valid echo signal. The preset threshold may be set according to an actual product requirement. For example, the preset threshold may be set to 0.2 V-2 V, typically less than 1 V. Or the preset threshold may be set to 0.05 A-1 A, for example, 0.1 A. An echo signal with an amplitude greater than the threshold may generate a valid pulse trigger signal.

Step S804: The pulse trigger signal is delayed by a preset time length to generate a delay trigger signal.

In a case that an obstacle with a relatively short distance is measured, because of the short distance, an emitted optical pulse signal may be superposed with an echo signal, and consequently, accurate measurement cannot be achieved. Therefore, in this embodiment of the present disclosure, step S804 is provided, in which the pulse trigger signal is delayed, that is, the pulse trigger signal is delayed by a preset time length, such that a delay trigger signal is generated at a preset time length after the pulse trigger signal. Thus, superposition of the emitted optical pulse signal with the delay trigger signal is avoided, which facilitates to extract, from the delay trigger signal, data related to determining the distance to the obstacle, thereby eliminating a dead zone in short ranging.

In a case that the pulse ranging apparatus according to this embodiment is applied to an autonomous cleaning device, especially a household autonomous cleaning device, because application scenarios of the device are mostly in home, short-distance ranging is mostly performed. For example, in a case that the distance from the autonomous cleaning device to the obstacle is 0.5 m, it can be learned, according to a relationship among the speed of light, the distance to the obstacle, and the time of flight, that a time difference between an emitted laser pulse and a received reflected laser pulse is approximately 3.3 ns. In a case that a width of a pulse laser is 5 ns, superposition of the emitted pulse laser with the received pulse laser occurs. As illustrated in FIG. 6, a zone between two dashed lines indicates a dead zone finally caused.

In actual applications, the preset time length may be set to be greater than or equal to one pulse width, so that an echo signal and an emitted signal are effectively separated. For example, the preset time length may be 1 to 10 pulse widths. And for another example, the preset time length may be 1 to 3 pulse widths. For example, in a case that the echo pulse width is about 5 ns, and the preset time length may be set to be greater than 5 ns, such as, in a time range of 5 ns-50 ns, or in a time range of 5 ns-7 ns.

Step S805: A time of flight of the optical pulse signal is determined according to an emitting time of the optical pulse signal, a generating time of the delay trigger signal, and a delay of the preset time length.

A dual-channel timing circuit may be configured to determine the time of flight of the optical pulse signal, wherein two channels of the dual-channel timing circuit respectively times a rising edge and a falling edge of the delay trigger signal, and a pulse width of the delay trigger signal is determined according to the rising edge and the falling edge.

Optionally, the method further includes: amplifying the delay trigger signal. The amplification of the delay trigger signal may improve signal recognition accuracy.

Step S806: a distance between the pulse ranging apparatus and the obstacle is determined according to the time of flight of the optical pulse signal.

Optionally, the method further includes Step S807.

Step S807: the distance between the pulse ranging apparatus and the obstacle is corrected according to a pulse width of the delay trigger signal.

The pulse width indicates an intensity of an echo pulse, and may reflect information such as a reflectivity of a measured target.

For example, first, n obstacles, T₁, T₂, ..., Tₙ, which have a same calibration distance D₀ and different reflectivity, may be provided, and a laser pulse signal is respectively emitted to the n obstacles. Then, echo signals are received and processed to obtain pulse widths δt₁, δt₂, ..., δtₙ of echo signals corresponding to the n obstacles respectively, wherein δtₙ=t₂ₙ-t₁ₙ, and t2n and t₁ₙ indicate respectively a falling edge moment and a rising edge moment of an n-th echo signal. Initial distance values D₁, D₂, ..., Dₙ of the n obstacles are obtained through a TOF method according to an initial emitting moment to and a rising edge moment that corresponds to an n-th obstacle. Then, according to the initial distance values D₁, D₂, ..., Dₙ and the calibration distance D₀ of the n obstacles, corresponding distance error values δd₁, δd₂, ..., δdₙ are obtained, wherein δdₙ=Dₙ-D₀. A correspondence between δdₙ and δtₙ is established. Optionally, the correspondence may be established through a piecewise approximation method or a polynomial fitting method, or may be established by establishing a correspondence table through a table lookup method. Finally, in actual measurement, after a pulse width δtₓ of an echo reflected by a currently measured target is obtained, a distance error value δdₓ corresponding to δtₓ may be obtained through the correspondence, and the initial distance value Dₓ is corrected and compensated by δdₓ, so as to obtain a corrected distance value D=Dₓ+δdₓ.

After the initial distance value is corrected and compensated, the ranging accuracy and the measurement range are improved.

In the pulse ranging method, after a reflected optical pulse signal by an obstacle is received, the pulse signal is delayed to some extent, so as to prevent superposition between an emitted optical pulse signal and a received optical pulse signal, thereby avoiding a measurement dead zone. The foregoing descriptions are merely some embodiments of the present disclosure and descriptions of the applied technical principles. One of ordinary skill in the art should understand that the disclosure scope involved in the present disclosure is not limited to technical solutions formed by a specific combination of the foregoing technical features, but also covers technical solutions formed by any combination of the foregoing technical features or equivalent features thereof without departing from the foregoing disclosure concept, for example, technical solutions formed by inter-changing the foregoing features and technical features (nonrestrictive) of the present disclosure that have similar functions.

In addition, while operations are depicted in a particular order, this should not be construed as requiring such operations to be performed in the particular order illustrated or in a sequential order. Under certain circumstances, multi-task and parallel processing may be advantageous. Similarly, although several specific implementation details are included in the foregoing description, these should not be construed as a limit to the scope of the present disclosure. Certain features described in the context of individual embodiments may also be in combined in a single embodiment. On the contrary, various features described in the context of a single embodiment may also be implemented individually or in any suitable sub-combination in multiple embodiments. Although the subject matter has been described in a language specific to structural features and/or logic actions of method, it should be understood that the subject matter defined in the appended claims is not necessarily limited to the specific features or actions described above. In contrast, the specific features and actions described above are merely exemplary manners for implementing the claims.

## Claims

1. A pulse ranging apparatus, comprising:
an emitting unit, configured to emit an optical pulse signal;
a receiving unit, configured to receive a reflected optical pulse signal by an obstacle, and convert the reflected optical pulse signal into an electrical signal;
a threshold comparator, configured to compare the electrical signal with a preset threshold, and to generate a pulse trigger signal according to a comparison result;
a time delay unit, configured to delay the pulse trigger signal by a preset time length to generate a delay trigger signal;
a timing unit, configured to determine a time of flight of the optical pulse signal according to an emitting time at which the emitting unit emits the optical pulse signal, a generating time at which the delay trigger signal is generated, and a delay of the preset time length; and
a distance determination unit, configured to determine a distance between the pulse ranging apparatus and the obstacle according to the time of flight of the optical pulse signal.

2. The pulse ranging apparatus according to claim 1, wherein the distance determination unit further comprises a correction subunit, and the correction subunit is configured to correct the distance between the pulse ranging apparatus and the obstacle according to a pulse width of the delay trigger signal.

3. The pulse ranging apparatus according to claim 2, wherein the timing unit comprises a dual-channel timer, two channels of the dual-channel timer respectively time a rising edge and a falling edge of the delay trigger signal, and the timing unit determines the pulse width of the delay trigger signal according to the rising edge and the falling edge.

4. The pulse ranging apparatus according to claim 3, wherein the dual-channel timer comprises:
an amplification circuit, configured to amplify the delay trigger signal.

5. The pulse ranging apparatus according to any one of claims 1 to 4, wherein the time delay unit comprises one of followings:
a time delay circuit comprising a gate circuit and a capacitor;
a time delay circuit comprising gate circuits connected in series; and
a time delay circuit comprising a capacitor.

6. The pulse ranging apparatus according to any one of claims 1 to 4, wherein the receiving unit comprises a PIN diode configured to convert the optical pulse signal into an electrical signal.

7. A pulse ranging method, comprising:
emitting an optical pulse signal;
receiving a reflected optical pulse signal by an obstacle, and converting the reflected optical pulse signal into an electrical signal;
comparing the electrical signal with a preset threshold, and generating a pulse trigger signal according to a comparison result;
delaying the pulse trigger signal by a preset time length to generate a delay trigger signal;
determining a time of flight of the optical pulse signal according to an emitting time of the optical pulse signal, a generating time of the delay trigger signal, and a delay of the preset time length; and
determining a distance between a pulse ranging apparatus and the obstacle according to the time of flight of the optical pulse signal, wherein the pulse ranging apparatus sends and receives the optical pulse signal.

8. The pulse ranging method according to claim 7, further comprising:
correcting the distance between the pulse ranging apparatus and the obstacle according to a pulse width of the delay trigger signal.

9. The pulse ranging method according to claim 7 or 8, further comprising: amplifying the delay trigger signal.

10. An autonomous cleaning device, comprising the pulse ranging apparatus according to any one of claims 1 to 6.

11. The autonomous cleaning device according to claim 10, comprising one pulse ranging apparatus, wherein the pulse ranging apparatus is disposed at the top of the autonomous cleaning device.

12. The autonomous cleaning device according to claim 10, comprising multiple pulse ranging apparatuses, wherein the pulse ranging apparatuses are disposed on a side surface of the autonomous cleaning device.
